# EUROPEAN PATENT SPECIFICATION

(11) **EP 1 720 648 B1**
(45) Date of publication and mention of the grant of the patent: **11.08.2010**
(21) Application number: 05716934.4
(22) Date of filing: 07.03.2005
(51) Int. Cl.: B01J 8/22, C10G 2/00, B01D 29/00, B01D 35/12

(54) **FILTER SYSTEM WITH FILTER MEANS RETRACTABLE INTO A HOUSING**
FILTERSYSTEM MIT IN EIN GEHÄUSE ZURÜCKZIEHBAREN FILTERMITTELN
SYSTÈME DE FILTRE COMPORTANT DES MOYENS DE FILTRATION RÉTRACTABLES DANS UN BOITIER

(30) Priority: 08.03.2004 EP 04251319
(43) Date of publication of application: 15.11.2006
(73) Proprietor: Shell Internationale Research Maatschappij B.V., 2596 HR Den Haag (NL)
(72) Inventor: BOER, Anne, NL-1031 CM Amsterdam (NL); SCHRAUWEN, Franciscus Johannes Maria, NL-1031 CM Amsterdam (NL)
(74) Representative: Matthezing, Robert Maarten
(86) International application number: PCT/EP2005/051002
(87) International publication number: WO 2005/084791

(56) References cited:
- US-A1- 2003 057 132
- US-A1- 2003 087 970
- US-B1- 6 344 490

## Description

The present invention relates to a filter system for use in a reactor. In particular, the invention relates to filter system suitable for a reactor to be used for exothermic reactions such as Fischer-Tropsch reactions, as well as to hydrocarbons and fuels derived from these hydrocarbons which can be made by the hydrogenation of carbon monoxide in a process using the reactor and the filter system.

The Fischer-Tropsch process is often used for the conversion of hydrocarbonaceous feed stocks into liquid and/or solid hydrocarbons. The feed stock (e.g. natural gas, associated gas, coal-bed methane, residual (crude) oil fractions and/or coal) is converted in a first step into a mixture of hydrogen and carbon monoxide (this mixture is often referred to as synthesis gas). The synthesis gas is then fed into a reactor where it is converted in a second step over a suitable catalyst at elevated temperature and pressure into paraffinic compounds ranging from methane to high molecular weight molecules comprising up to 200 carbon atoms, or, under particular circumstances, even more.

Numerous types of reactor systems have been developed for carrying out the Fischer-Tropsch reaction. For example, Fischer-Tropsch reactor systems include fixed bed reactors, especially multi tubular fixed bed reactors, fluidised bed reactors, such as entrained fluidised bed reactors and fixed fluidised bed reactors, and slurry bed reactors such as three-phase slurry bubble columns and ebulated bed reactors.

The Fischer-Tropsch reaction is very exothermic and temperature sensitive with the result that careful temperature control is required to maintain optimum operation conditions and desired hydrocarbon product selectivity.

The heat transfer characteristics of fixed-bed reactors are generally poor because of the relatively low mass velocity, small particle size and low thermal capacity of fluids. If one attempts, however, to improve the heat transfer by increasing the gas velocity, a higher CO conversion can be obtained, but there is an excessive pressure drop across the reactor, which limits commercial viability. In order to obtain the CO conversions desired and gas through-puts of commercial interest, the conditions result in substantial radial temperature gradients. For that reason, the Fischer-Tropsch fixed-bed reactor tubes should have a diameter of less than 5 or 7 cm to avoid excessive radial temperature profiles. The desired use of high-activity catalysts in Fischer-Tropsch fixed-bed reactors makes the situation even worse. The poor heat transfer characteristics make local runaways (hotspots) possible, which may result in local deactivation of the catalyst. In order to avoid runaway reaction the maximum temperature within the reactor must be limited. However, the presence of temperature gradients within the reaction mixture means that much of the catalyst may be operating at sub-optimal levels.

The use of liquid recycles as a means of improving the overall performance in a fixed-bed design has been described. Such a system is also called a "trickle bed" reactor (as part of a sub set of fixed-bed reactor systems) in which both reactant gas and liquid are introduced (preferably in an up flow or down flow orientation with respect to the catalyst) simultaneously. The presence of the flowing reactant gas and liquid improves the reactor performance with respect to CO conversion and product selectivity. A limitation of the trickle bed system (as well as of any fixed-bed design) is the pressure drop associated with operating at high mass velocities. The gas-filled voidage in fixed-beds (typically less than 0.50) and size and shape of the catalyst particles does not permit high mass velocities without excessive pressure drops. Consequently, the mass through-put undergoing conversion per unit reactor volume is limited due to the head transfer rates. Increasing the individual catalyst particle size may slightly improve the heat transfer by allowing higher mass velocities (for a given pressure drop), but the loss in selectivity towards the high boiling point products and the increase in methane selectively combined with the increase in catalyst activity generally offset the commercial incentives of higher heat transfer.

Three-phase slurry bubble column reactors generally offer advantages over the fixed-bed design in terms of heat transfer characteristics. Such reactors typically incorporate small catalyst particles suspended by upward flowing gas in a liquid continuous matrix. A plurality of cooling tubes are present in three phase slurry reactors. The motion of the continuous liquid matrix allows sufficient heat transfer to achieve a high commercial productivity. The catalyst particles are moving within a liquid continuous phase, resulting in efficient transfer of heat generated from catalyst particles to the cooling surfaces, while the large liquid inventory in the reactor provides a high thermal inertia, which helps prevent rapid temperature increases that can lead to thermal runaway.

A number of ways have been proposed to separate liquid, especially liquid hydrocarbons reaction products produced in a Fischer Tropsch reaction, from the slurry in a three phase slurry reactor.

Thus, European patent application 609 079 describes a slurry bubble column containing a slurry bed of catalyst particles suspended in a liquid. A filtration zone is located in the slurry bed, in particular close to the upper surface of the slurry bed. The filtration zone typically comprises a plurality of filter elements. The filter elements are typically of elongated cylindrical form and comprise a cylindrical filtering medium enclosing.a filtrate collection zone. The filtration results in the formation of a cake, which is removed by back flushing.

European patent application 592 176 describes a filtration zone consisting of a tube sheet holding filter cartridges. The tube sheet defines the upper surface of the slurry bed.

International (PCT) application No. 94/16807 describes a filtration zone surrounding the slurry bed. No cake build-up is observed because a very low mean pressure differential is used over the filter elements. A critical value of 6 mbar is mentioned in the description.

UK patent application 2 281 224 discloses a reactor containing a plurality of reaction tubes arranged to accommodate the slurry bed. The upper part of each contains a filter element to separate hydrocarbon product slurry, and a top part of increased diameter, often referred to as a disengagement zone, to separate gas from the slurry.

US patent 5,324,335 describes the preparation of hydrocarbons using an (unsupported) iron catalyst. To avoid the continuous increase in slurry height in the reactor vessel, wax is separated from the slurry using a cross-flow filter located outside the reactor vessel. Filter cake is regularly removed by pressurising the filtered wax on the shell side of the filter with an inert gas to bump the cake into the slurry stream.

German patent 3,245,318 describes a process for separating a liquid product stream from a slurry, by cross-flow filtration, which is carried out at substantially reactor pressure, but outside the reactor. Regular back flushing of the filter medium by reversal of the pressure over the filter element is necessary.

US patent 6,344,490 describes a three phase slurry bubble column comprising one or more filter assemblies suspended in a slurry. The construction of the reactor and the filter assemblies is such that each assembly can be removed via an opening in the top of the reactor. From the description it is clear that the change is done at ambient pressure. Thus, in the case that one or more filters need to be replaced in the process according to US 6,344,490, the process needs to be stopped, the reactor needs to be depressurised, and a restart (at high pressure and high temperature) needs to be done. For a large commercial slurry reactor it will take several hours to cool down the reactor by 75-100 °C, depressurisation, filter exchange, repressurisation and heating up by 75-100 °C.

US patent application 2003/0087970 describes the separation of solid catalyst particles from a Fischer- Tropsch synthesis slurry liquid in a solids filter suspended in the reactor by means of a metal rod located in the interior of a vertical downcorner and removable from the reactor through a part for maintenance and replacement.

The present invention provides a filter system for use in a reactor, the filter system having filter means to separate fluid from a mixture of particulate matter and fluid, and having a filter housing adapted to connect to the reactor and adapted to receive the filter means, wherein the filter means is retractable into the housing.

The advantage of the present invention is that it is not needed any more to stop the process, cool down the inventory and to pressurise and heat up the reactor till the reaction temperature. Suitably the reaction temperature is decreased by 25-75 °C, i.e. just sufficient to stop the reaction. The amount of synthesis gas introduced in the reactor may be decreased by up to 75%. At least 10%, preferably about 20% is usually still introduced in the reactor in order to keep the catalyst particles in suspension. The remaining syn gas stream may be replaced by another gas, e.g. an inert gas as nitrogen or by a recycle stream. Preferably the reaction the reactor temperature is decreased by less than 25 °C, preferably less than 10 °C, and the reaction is continued at the same productivity as the continuous productivity.

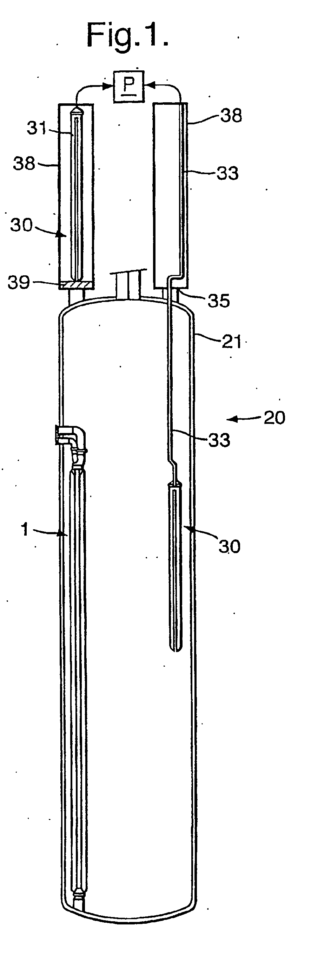

The filter means is typically retractable through an aperture in the reactor, typically on an upper surface of the reactor, especially the top of a large tubular reactor as depicted in Figure 1. The housing is typically detachably connected to the aperture.

Typically the filter means has an export conduit leading from the filter means, to deliver filtrate from the filter means to processing equipment outside the reactor. The filter means may optionally have a connector for a hoist line, to facilitate retraction of the filter means into the housing, or simply may be retracted via the export conduit. The hoist line or the export conduit may be activated to pull the filter means into the housing from the reactor.

Typically the housing has an outlet for removing the filter means therefrom. In certain embodiment the housing can have an outlet port at the top or at a side though which the filter can be removed from the housing, or in more simple embodiments the housing is detachable from the reactor, so that the filter can be removed via the aperture used to retract the filter into the housing. A suitable housing is an elongated tube or pipe, preferably provided with detachable closing and/or sealing devices.

The housing preferably has at least one sealing device such as a valve for sealing the aperture between the reactor and the housing, so that when the filter means is retracted within the housing past the aperture, the sealing device can be actuated to seal the aperture and isolate the housing from the reactor. This permits the subsequent removal of the filter means from the housing, and de-pressurisation of the housing, without de-pressurising the reactor.

Typically the filter means is lowered under gravity through an aperture in the upper surface of the reactor. When in use, the filters preferably are situated below the surface level of the expanded slurry bed.

In certain embodiments, the filter means can be provided with a cap adapted to prevent settling of fines on the filter means, and this is typically achieved by providing the cap with a sloped upper surface, so as to reduce the horizontal surface area presented by the filter means. In practice, conical or frusto-conical caps are preferred, with steep slopes so that fines of catalyst that settle on the top of the cap generally slide off and are dispersed into the slurry, and do not settle on the cap. This reduces the tendency of solid particles of catalyst to settle on the top of the filter means, which has the advantage that there is a reduced risk of uncontrolled exothermic reactions between the slurry and the localised build-up of catalyst on the top of the filter caps.

According to a further aspect, the invention provides a method of removing a filter from a reactor, the method comprising the steps of providing a filter housing communicating with the reactor through an aperture, retracting the filter from the reactor through the aperture and into the filter housing, and sealing the aperture between the reactor and the housing.

Typically the filter is removed from the housing after the aperture has been sealed, in order to maintain the integrity of the pressure in the reactor. Optionally the housing can be pressurised to match the internal pressure of the reactor before the aperture to the reactor is opened, to replace the retracted filter with a new one.

Especially when a number of filter systems e.g. 2-16, especially 4-12, are present in one reactor, and the total filtration capacity of all filter systems is more than the required filtration capacity in view of the production, there is the possibility to change filters without the need to stop the reaction. In view of the installed filtration overcapacity, one or even more filters may be removed and replaced by new and/or repaired filters. Especially in view of the large productivity of commercial Fischer-Tropsch reactors - such reactors will have a production capacity of 10.000-20.000 bll/day - it is clear advantage to be able to continue the production of hydrocarbons from synthesis gas rather than to have to stop the reactor, depressurisation of the reactor, followed by a restart of the chemical process (CO hydrogenation).

In a preferred embodiment the filter is replaced by pressurisation of the filter housing until the pressure is the same as the reactor pressure and cooling down the reactor up till 100 °C, suitably by 25-75 °C, followed by opening the aperture between the housing and the reactor, retracting the filter from the reactor through the aperture and into the filter housing and sealing the aperture between the reactor and the housing, followed by heating up the reactor by up till 100 °C, suitably 25-75 °C, and continuing the process. Preferably the amount of gas which is introduced in the reactor is decreased by 50%, preferably 75%. The synthesis gas may be replaced partly or completely by nitrogen.

In a further preferred embodiment the filter is replaced by pressurisation of the filter housing until the pressure is the same as the reactor pressure, followed by opening the aperture between the housing and the reactor, retracting the filter from the reactor through the aperture and into the filter housing and sealing the aperture between the reactor and the housing. In this embodiment the hydrocarbon synthesis process is continued at the same temperature and pressure as before the filter replacement. Suitably the reaction is continued at a production rate of at least 25% of the usual production rate, more preferably at at least 50% of the usual production rate.

It will be understood that after closing of the aperture between the housing and the reactor the filter can be removed from the housing by depressurisation of the housing, opening of the housing, preferably at the top of the housing, and removal of the filter from the housing.

In the same way as described above, but in the reverse order, a new or repaired filter may be introduced in the reactor. The same preferred embodiments as described above apply also for the introduction of the new or repaired filter. Before pressurisation of the housing, the housing is flushed with an inert gas, e.g. nitrogen. Pressurisation can be done by means of an inert gas, e.g. nitrogen and/or hydrocarbon synthesis off gas.

Without wishing to be restricted to a particular embodiment, the invention will now be described in further detail with reference to the drawings in which:
Figure 1 is a side view of a general arrangement of a reactor having a filter system;
Figure 2 is plan view of the reactor of Fig. 1, showing the arrangement of filters around the pipework of the Fig. 1 reactor;

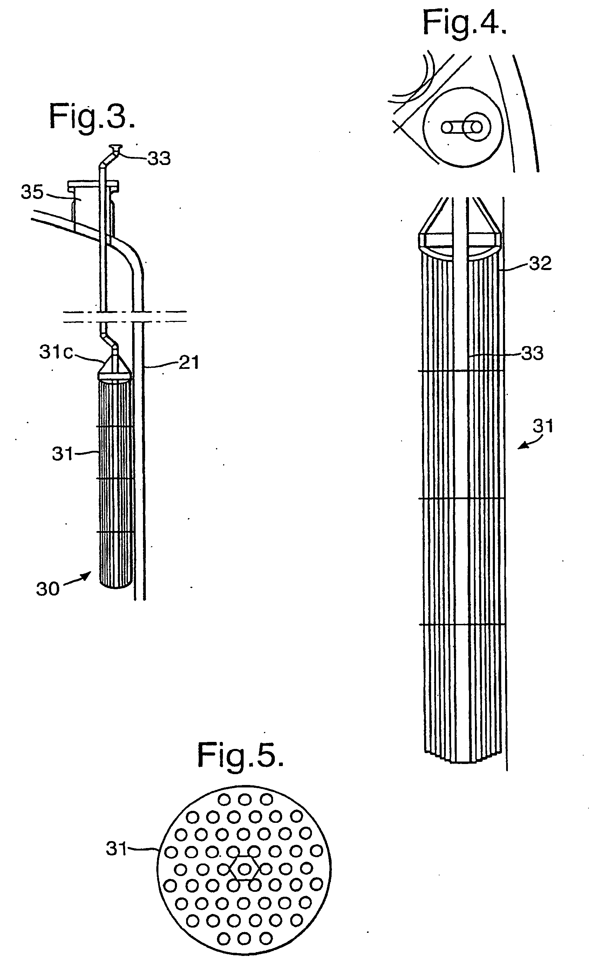

Figure 3 is a side view of a filter system of the Fig. 1 reactor;
Figure 4 is a side view showing the detail of the filter module; and
Figure 5 is a cross-sectional view of a filter module.

Turning now to Figure 1 a reactor 20 has an outer shell 21 defining a chamber into which reactants are delivered. The reactor in this embodiment is typically used for carrying out three-phase slurry reactions, such as for example Fisher Tropsch type reactions.

Since the Fischer-Tropsch reaction is exothermic, the reactor 20 houses a number of cooling modules 1 for delivering and circulating coolant through the circulation system of coolant pipes within the reactor shell 21. Heat is transferred from the slurry surrounding the cooling modules 1 to the coolant as it passes through the circulation system of the module. Suitable coolants will be known to the person skilled in the art and include for example water/steam or oil based coolants.

Liquid phase reactants and solid particulate catalyst are fed into the reactor chamber from feed pipes (not shown), and gas phase reactants are delivered at the base of the reactor. The bubbles of gas rise in the liquid phase and interact with the solid particulate catalyst in the liquid phase to form reaction products, which are removed from the reactor. Gas phase products are typically removed by cyclones (not shown), and the light wax fractions that leave the reactor in gas phase can be recovered by cooling/condensation. The heavier fractions largely composed of liquid waxes comprising high-value long-chain hydrocarbons are separated from the slurry by filtration before being recovered for further processing.

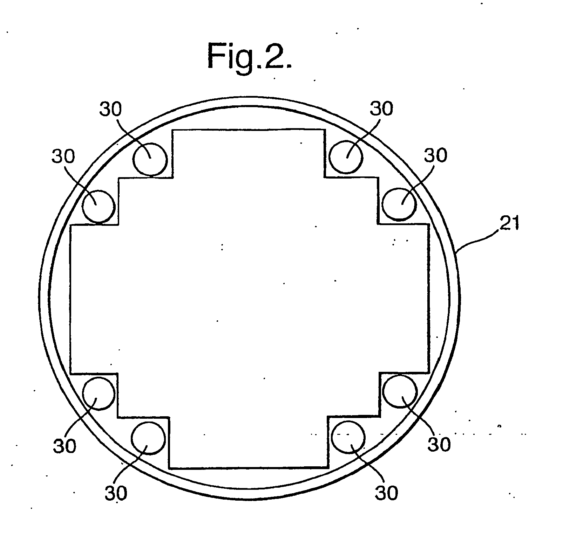

The filter system comprises a number of filter modules 30, typically arranged around the densely packed cooling modules 1 (shown in outline in Fig. 2) preferably around the periphery of the array of cooling modules 1. 8 filter modules 30 are shown in the Fig. 1 embodiment, but the number of filter modules used can vary in accordance with the circumstances. Typically 2-20, preferably 4-10, filter modules 30 would be advantageous. In a preferred embodiment the filters are used as in pairs of filter arranged in a vertical assemblement, i.e. one filter immediately above another filter. In this situation a relative small housing can be used.

The type of filter selected is not crucial to the invention, but in this embodiment, each filter module 30 comprises a pair of filter bundles 31 formed from woven stainless steel gauze material. A useful configuration is a "sandwich" construction achieved by sintering the layers together, and the resultant material is then formed into filter tubes 32 of OD 40 mm and length 4 m, of which about 50-60 are arranged in each filter bundle 31 around a central export conduit 33. Each filter module 30 can comprise one or more filter bundles 31 connected in series or in parallel to a common export conduit 33. One filter module 30 is shown in the drawings.

The export conduit 33 carries the filtered wax products through an outlet of the reactor for further processing, and optionally supports the weight of the filter module while it is suspended in the reactor.

The export conduit 33 passes intact through a flanged aperture 35 in the upper surface of the reactor 20 and through a filter housing 38 attached to the flanged aperture 35. The export conduit 33 passes intact through an iris gland at the top of the filter housing 38. The filter housing 38 is disposed directly above the flanged aperture and is connected to the flange via a valve 39, which can be closed to seal the aperture and thereby isolate the reactor 20 from the filter housing 38. Filtered products passing through the export conduit 33 are passed to further processing equipment P.

The filter housing 38 is in the form of a long cylinder slightly longer and wider than the filter modules 30, so that a single filter module 30 can be received within the housing 38 without obstructing the subsequent sealing of the valve 39.

In operation, the filter modules 30 hang below the apertures 35, and are suspended from the export lines 33 in the upper part of the reactor, but immersed in the slurry, as shown on the right hand side of Fig. 1. In normal operation, a layer of catalyst builds up on the surface of the filter modules, and this helps the filtration process as clean wax is separated through the pores of the catalyst layer. The flow rate of wax through the export conduit 33 is controlled by creating and adjusting a pressure differential across the filter module 30. Continuous filtration can be achieved at various flow rates using appropriate pressure differentials, but those skilled in the art will appreciate the rates and pressure differentials may be varied in accordance with the filter type, surface area, viscosity of the fluids, and the various other characteristics of the system.

The location of the filter modules 30 at the top of the slurry zone in this embodiment gives various advantages. Notably, the local concentration of catalyst at the top of the slurry zone is less than at the bottom of the reactor, due to the tendency of the catalyst particles to settle under gravity in the slurry. This reduction of particulate matter in the area of the filter modules 30 reduces their tendency to block, and increases their useful life. In addition, filter modules 30 will displace cooling modules from the reactor space there is a risk of uncontrolled reactions occurring adjacent to the filter modules 30. Therefore, it is useful to site the filter modules 30 in an area of the slurry zone where the reactions can be limited by the naturally reduced concentrations of catalyst particles. Also, locating the filter modules 30 at the top of the slurry zone minimises the required length of the filter modules, and the export conduit 33 or hoist apparatus, thereby facilitating handling of the filter modules 30 during changeovers.

When a filter module 30 becomes blocked or damaged, or when the filtration rate falls, the pressure differential across the module 30 can be reversed to blow waxes or cleaning fluids back into the filter to clear the blockage. This can be conducted regularly as part of the normal operating procedures, and may improve the filtration properties of the module in question, but at some point the filter module 30 will need to be removed from the reactor 20 for repair or replacement.

When a filter module is to be removed, the gas injection into the reactor is optionally interrupted, the pressure differential across the module 30 is removed or reduced, and the export conduit 33 is withdrawn through the iris gland at the top of the filter housing 38 to retract the filter module 30 through the aperture at the top of the reactor 20 and into the filter housing 38, as shown on the left hand side of Fig. 1. At this point the pressure in the filter housing 38 is equalised with the pressure in the reactor. When the filter module 30 is wholly within the housing 38, the valve 39 is closed to seal off the aperture 35 and isolate the filter housing 38 from the reactor 20. At that point the filter housing 38 can be removed from the flanged aperture at the top of the reactor entirely, and the filter module 30 removed therefrom. Alternatively, the housing 38 can remain attached to the reactor, and the filter module can be removed through a port (not shown) through the end or side wall of the housing 38. The damaged filter module 30 can then be repaired and a replacement or repaired filter module 30 can be positioned within the housing 38, still with the valve 39 being kept closed to isolate the reactor 20 from the housing 38. When the replacement filter module 38 is in place in the housing 38, and the housing is secured to the flange, housing 38 can be pressurised up to the reactor pressure, the valve 39 can be opened again, and the replacement filter module can be lowered into the slurry zone as shown in the right hand side of Fig. 1.

This permits changeover of filter modules to repair or replace damaged or blocked filters without depressurising or cooling the reactor 20. The temporary cessation of gas injection is preferred (although not essential), and recovery of waxes can continue in certain circumstances through the remaining filters. Thus a rolling programme of filter replacement can be implemented without disturbing the production regime.

In some embodiments a number of export conduits can pass through a single aperture 35, to service more than one filter module 30 per aperture.

In some circumstances, fixed filters can also be incorporated into the reactor, typically at positions in the slurry zone below the removable filter modules 30.

The filter bundle 31 in each module 30 typically has a conical cap 31c with a steep slope in order to reduce the tendency of catalyst particles to settle on top of the filter bundles 31.

In certain circumstances a back-up external filtration system can be used, by diverting products flowing through the export conduit 33 into an external filtration loop, and back into the processing equipment P.

Modifications and improvements can be incorporated without departing from the scope of the invention. For example, the average particle size of the catalyst particles may vary between wide limits, depending inter alia on the type of slurry zone regime. Typically, the average particle size may range from 1 µm to 2 mm, preferably from 1 µm to 1 mm.

If the average particle size is greater than 100 µm, and the particles are not kept in suspension by a mechanical device, the slurry zone regime is commonly referred to as ebulating bed regime. Preferably, the average particle size in an ebulating bed regime is less than 600 µm, more preferably in the range from 100 to 400 µm. It will be appreciated that in general the larger the particle size of a particle, the smaller the chance that the particle escapes from the slurry zone into the freeboard zone. Thus, if an ebulating bed regime is employed, primarily fines of catalyst particles will escape to the freeboard zone.

If the average particle size is at most 100 µm, and the particles are not kept in suspension by a mechanical device, the slurry zone regime is commonly referred to as a slurry phase regime. Preferably, the average particle size in a slurry phase regime is more than 5 µm, more preferably in the range from 10 to 75 µm.

If the particles are kept in suspension by a mechanical device, the slurry zone regime is commonly referred to as stirred tank regime. It will be appreciated that in principle any average particle size within the above ranges can be applied. Preferably, the average particle size is kept in the range from 1 to 200 µm.

The concentration of catalyst particles present in the slurry may range from 5 to 45% by volume, preferably, from 10 to 35% by volume. It may be desired to add in addition other particles to the slurry, as set out in for example European Patent Application Publication No. 0 450 859. The total concentration of solid particles in the slurry is typically not more than 50% by volume, preferably not more than 45% by volume. One or more draft tubes may be used to improve the catalyst dispersion.

Suitable slurry liquids are known to those skilled in the art. Typically, at least a part of the slurry liquid is a reaction product of the exothermic reaction. Preferably, the slurry liquid is substantially completely a reaction product.

The exothermic reaction is a reaction which is carried out in the presence of a solid catalyst, and which is capable of being carried out in a three-phase slurry reactor. Typically, at least one of the reactants of the exothermic reaction is gaseous. Examples of exothermic reactions include hydrogenation reactions, hydroformylation, alkanol synthesis, the preparation of aromatic urthanes using carbon monoxide, Kölbel-Engelhardt synthesis, polyolefin synthesis, and Fischer-Tropsch synthesis. According to a preferred embodiment of the present invention, the exothermic reaction is a Fischer-Tropsch synthesis reaction.

The Fischer-Tropsch synthesis is well known to those skilled in the art and involves synthesis of hydrocarbons from a gaseous mixture of hydrogen and carbon monoxide, by contacting that mixture at reaction conditions with a Fischer-Tropsch catalyst.

Products of the Fischer-Tropsch synthesis may range from methane to heavy paraffinic waxes. Preferably, the production of methane is minimised and a substantial portion of the hydrocarbons produced have a carbon chain length of a least 5 carbon atoms. Preferably, the amount of C₅+ hydrocarbons is at least 60% by weight of the total product, more preferably, at least 70% by weight, even more preferably, at least 80% by weight, most preferably at least 85% by weight.

Fischer-Tropsch catalysts are known in the art, and typically include a Group VIII metal component, preferably cobalt, iron and/or ruthenium, more preferably cobalt. Typically, the catalysts comprise a catalyst carrier. The catalyst carrier is preferably porous, such as a porous inorganic refractory oxide, more preferably alumina, silica, titania, zirconia or mixtures thereof.

The optimum amount of catalytically active metal present on the carrier depends inter alia on the specific catalytically active metal. Typically, the amount of cobalt present in the catalyst may range from 1 to 100 parts by weight per 100 parts by weight of carrier material, preferably from 10 to 50 parts by weight per 100 parts by weight of carrier material.

The catalytically active metal may be present in the catalyst together with one or more metal promoters or cocatalysts. The promoters may be present as metals or as the metal oxide, depending upon the particular promoter concerned. Suitable promoters include oxides of metals from Groups IIA, IIIB, IVB, VB, VIB and/or VIIB of the Periodic Table, oxides of the lanthanides and/or the actinides. Preferably, the catalyst comprises at least one of an element in Group IVB, VB and/or VIIB of the Periodic Table, in particular titanium, zirconium, manganese and/or vanadium. As an alternative or in addition to the metal oxide promoter, the catalyst may comprise a metal promoter selected from Groups VIIB and/or VIII of the Periodic Table. Preferred metal promoters include rhenium, platinum and palladium.

A most suitable catalyst comprises cobalt as the catalytically active metal and zirconium as a promoter. Another most suitable catalyst comprises cobalt as the catalytically active metal and manganese and/or vanadium as a promoter.

The promoter, if present in the catalyst, is typically present in an amount of from 0.1 to 60 parts by weight per 100 parts by weight of carrier material. It will, however, be appreciated that the optimum amount of promoter may vary for the respective elements which act as promoter. If the catalyst comprises cobalt as the catalytically active metal and manganese and/or vanadium as promoter, the cobalt : (manganese + vanadium) atomic ratio is advantageously at least 12:1.

The Fischer-Tropsch synthesis is preferably carried out at a temperature in the range from 125 to 350 °C, more preferably 175 to 275 °C, most preferably 200 to 260 °C. The pressure preferably ranges from 5 to 150 bar abs., more preferably from 5 to 80 bar abs.

Hydrogen and carbon monoxide (synthesis gas) is typically fed to the three-phase slurry reactor at a molar ratio in the range from 0.4 to 2.5. Preferably, the hydrogen to carbon monoxide molar ratio is in the range from 1.0 to 2.5.

The gaseous hourly space velocity may vary within wide ranges and is typically in the range from 1500 to 10000 Nl/l/h, preferably in the range from 2500 to 7500 Nl/l/h.

The Fischer-Tropsch synthesis is preferably carried out in a slurry phase regime or an ebulating bed regime, wherein the catalyst particles are kept in suspension by an upward superficial gas and/or liquid velocity.

It will be understood that the skilled person is capable to select the most appropriate conditions for a specific reactor configuration and reaction regime.

Preferably, the superficial gas velocity of the synthesis gas is in the range from 0.5 to 50 cm/sec, more preferably in the range from 5 to 35 cm/sec.

Typically, the superficial liquid velocity is kept in the range from 0.001 to 4.00 cm/sec, including liquid production. It will be appreciated that the preferred range may depend on the preferred mode of operation.

According to one preferred embodiment, the superficial liquid velocity is kept in the range from 0.005 to 1.0 cm/sec.

## Claims

1. A filter system for use in a reactor, the filter system having filter means to separate fluid from a mixture of particulate matter and fluid, and having a filter housing adapted to connect to the reactor and adapted to receive the filter means, wherein the filter means is retractable into the housing, and wherein the housing has at least one sealing device to isolate the housing from the reactor.

2. A filter system as claimed in claim 1, wherein the filter means is retractable through an aperture in the reactor.

3. A filter system as claimed in claim 1 or claim 2, wherein the filter means is retractable through an aperture in the reactor on an upper surface of the reactor.

4. A filter system as claimed in any preceding claim, wherein the housing is typically detachably connected to the aperture.

5. A filter system as claimed in any preceding claim, wherein the filter means has an export conduit to deliver filtrate from the filter means.

6. A filter system as claimed in any preceding claim, wherein the filter means is retracted into the housing by the export conduit.

7. A filter system as claimed in any preceding claim, wherein the housing has an outlet for removing the filter means therefrom.

8. A filter system as claimed in any preceding claim, wherein the filter means has a cap adapted to prevent settling of fines on the filter means, preferably a filter system wherein the cap has a sloped upper surface.

9. A method of removing a filter from a reactor, the method comprising the steps of providing a filter housing communicating with the reactor through an aperture, retracting the filter from the reactor through the aperture and into the filter housing, and sealing the aperture between the reactor and the housing.

10. A method according to claim 9, wherein the filter is removed from the housing after the aperture has been sealed.

11. A method according to claim 9 or claim 10, wherein the housing is pressurised to match the internal pressure of the reactor before the aperture to the reactor is opened.

12. A reactor provided with one or more filter system according to any of claims 1 to 8.

13. Process for the preparation of hydrocarbons in a reactor by reacting carbon monoxide and hydrogen in the presence of a catalyst, preferably a supported cobalt catalyst, and in the presence of liquid hydrocarbons, and removing formed liquid hydrocarbons from the reactor by a filter system according to any one or more of claims 1 to 8, optionally followed by the hydrotreatment of the hydrocarbons obtained in the process, the hydrotreatment especially being the hydrogenation, hydroisomerisation and/or the hydrocracking, and if desired, followed by distillation.

## Patentansprüche

1. Filtersystem zur Verwendung in einem Reaktor, wobei das Filtersystem ein Filtermittel aufweist, um Fluid aus einem Gemisch von partikulärem Material und Fluid abzutrennen, und mit einem Filtergehäuse, welches adaptiert ist, um mit dem Reaktor verbunden zu werden, und adaptiert ist, um das Filtermittel aufzunehmen, wobei das Filtermittel in das Gehäuse zurückziehbar ist, und wobei das Gehäuse wenigstens eine Verschlussvorrichtung besitzt, um das Gehäuse vom Reaktor zu isolieren.

2. Filtersystem nach Anspruch 1, wobei das Filtermittel durch eine Öffnung im Reaktor zurückziehbar ist.

3. Filtersystem nach Anspruch 1 oder Anspruch 2, wobei das Filtermittel durch eine Öffnung im Reaktor an einer Oberseite des Reaktors zurückziehbar ist.

4. Filtersystem nach einem der vorstehenden Ansprüche, wobei das Gehäuse typischerweise lösbar mit der Öffnung verbunden ist.

5. Filtersystem nach einem der vorstehenden Ansprüche, wobei das Filtermittel eine Exportleitung aufweist, um Filtrat aus dem Filtermittel abzugeben.

6. Filtersystem nach einem der vorstehenden Ansprüche, wobei das Filtermittel in das Gehäuse durch die Exportleitung zurückgezogen wird.

7. Filtersystem nach einem der vorstehenden Ansprüche, wobei das Gehäuse einen Auslass umfasst, um das Filtermittel daraus zu entfernen.

8. Filtersystem nach einem der vorstehenden Ansprüche, wobei das Filtermittel eine Kappe besitzt, die adaptiert ist, um ein Absetzen von feinem Material auf dem Filtermittel zu verhindern, vorzugsweise ein Filtersystem, in welchem die Kappe eine abgeschrägte Oberseite besitzt.

9. Verfahren zur Entfernung eines Filters aus einem Reaktor, welches Verfahren die Schritte des Bereitstellens eines Filtergehäuses, welches mit dem Reaktor durch eine Öffnung in Verbindung steht, des Zurückziehens des Filters aus dem Reaktor durch die Öffnung und in das Filtergehäuse, und des Verschließens der Öffnung zwischen dem Reaktor und dem Gehäuse umfasst.

10. Verfahren nach Anspruch 9, wobei der Filter aus dem Gehäuse entfernt wird, nachdem die Öffnung verschlossen wurde.

11. Verfahren nach Anspruch 9 oder Anspruch 10, wobei das Gehäuse unter Druck gesetzt wird, um dem Innendruck des Reaktors zu entsprechen, bevor die Öffnung zum Reaktor geöffnet wird.

12. Reaktor, ausgestattet mit einem oder mehreren Filtersystemen gemäß einem der Ansprüche 1 bis 8.

13. Verfahren zur Herstellung von Kohlenwasserstoffen in einem Reaktor durch Umsetzen von Kohlenmonoxid und Wasserstoff in Gegenwart eines Katalysators, vorzugsweise eines Kobalt-Trägerkatalysators, und in Gegenwart von flüssigen Kohlenwasserstoffen, und Entfernen der gebildeten flüssigen Kohlenwasserstoffe aus dem Reaktor durch ein Filtersystem nach einem oder mehreren der Ansprüche 1 bis 8, wahlweise gefolgt von der Hydrobehandlung der im Verfahren erhaltenen Kohlenwasserstoffe, wobei die Hydrobehandlung, insbesondere die Hydrierung, die Hydroisomerisierung und/oder das Hydrocracken sind, und gewünschtenfalls gefolgt von einer Destillation.

## Revendications

1. Système de filtre pour usage dans un réacteur, le système de filtre ayant un moyen de filtration pour séparer un fluide d'un mélange de matière particulaire et de fluide, et ayant un logement de filtre adapté pour se raccorder au réacteur et adapté pour recevoir le moyen de filtration, dans lequel le moyen de filtration est rétractable dans le logement et dans lequel le logement a au moins un dispositif d'étanchéité pour isoler le logement du réacteur.

2. Système de filtre selon la revendication 1, dans lequel le moyen de filtration est rétractable à travers une ouverture du réacteur.

3. Système de filtre selon la revendication 1 ou la revendication 2, dans lequel le moyen de filtration est rétractable à travers une ouverture du réacteur sur une surface supérieure du réacteur.

4. Système de filtre selon l'une quelconque des revendications précédentes, dans lequel le logement est typiquement raccordé à l'ouverture de manière amovible.

5. Système de filtre selon l'une quelconque des revendications précédentes, dans lequel le moyen de filtration a un conduit d'évacuation pour évacuer le filtrat du moyen de filtration.

6. Système de filtre selon l'une quelconque des revendications précédentes, dans lequel le moyen de filtration est rétracté dans le logement par le conduit d'évacuation.

7. Système de filtre selon l'une quelconque des revendications précédentes, dans lequel le logement a une sortie pour en retirer le moyen de filtration.

8. Système de filtre selon l'une quelconque des revendications précédentes, dans lequel le moyen de filtration a une coiffe adaptée pour empêcher le dépôt de fines sur le moyen de filtration, de préférence un système de filtre dans lequel la coiffe a une surface supérieure inclinée.

9. Procédé de retrait d'un filtre d'un réacteur, le procédé comprenant les étapes consistant à mettre en oeuvre un logement de filtre communiquant avec le réacteur à travers une ouverture, rétracter le filtre du réacteur à travers l'ouverture et dans le logement de filtre, et fermer hermétiquement l'ouverture entre le réacteur et le logement.

10. Procédé selon la revendication 9, dans lequel le filtre est retiré du logement après fermeture hermétique de l'ouverture.

11. Procédé selon la revendication 9 ou 10, dans lequel le logement est sous pression pour s'adapter à la pression interne du réacteur avant que l'ouverture vers le réacteur ne soit ouverte.

12. Réacteur muni d'un ou plusieurs systèmes de filtre selon l'une quelconque des revendications 1 à 8.

13. Procédé pour la préparation d'hydrocarbures dans un réacteur en faisant réagir du monoxyde de carbone et de l'hydrogène en présence d'un catalyseur, de préférence un catalyseur de cobalt supporté, et en présence d'hydrocarbures liquides, et en retirant les hydrocarbures liquides formés du réacteur par un système de filtre selon l'une quelconque des revendications 1 à 8, étape éventuellement suivie de l'hydrotraitement des hydrocarbures obtenus dans le procédé, l'hydrotraitement étant en particulier l'hydrogénation, l'hydroisomérisation et/ou l'hydrocraquage et, si on le souhaite, suivi(e) d'une distillation.
